(19) Europäisches Patentamt
European Patent Office
Office européen des brevets

(11) **EP 0 773 598 A2**

(12) **EUROPEAN PATENT APPLICATION**

(43) Date of publication:
14.05.1997 Bulletin 1997/20

(21) Application number: 96117766.4

(22) Date of filing: 06.11.1996

(51) Int. Cl.⁶: **H01Q 21/06**, H01Q 15/02, H01Q 15/16, H01Q 15/24, H01Q 19/19

(84) Designated Contracting States:
DE FR GB

(30) Priority: 07.11.1995 JP 288971/95
11.07.1996 JP 182374/96

(71) Applicant: **Denso Corporation**
Kariya-City, Aichi-Pref. 448 (JP)

(72) Inventors:
- **Hazumi, Hiroshi**
Kariya-shi, Aichi 448 (JP)
- **Mizuno, Hiroshi**
Kariya-shi, Aichi 448 (JP)

- **Fujita, Akihisa**
Kariya-shi, Aichi 448 (JP)
- **Nakatani, Hiroto**
Kariya-shi, Aichi 448 (JP)
- **Naganawa, Hiroshi**
Kariya-shi, Aichi 448 (JP)
- **Sasaki, Kunihiko**
Kariya-shi, Aichi 448 (JP)

(74) Representative: **KUHNEN, WACKER & PARTNER**
Alois-Steinecker-Strasse 22
85354 Freising (DE)

(54) **Aperture antenna**

(57) An aperture antenna includes a dielectric lens for converging radar waves coming from the exterior and a transmit/receive section having at least two primary radiators for transmitting radar waves via the dielectric lens and receiving the radar waves converged via the dielectric lens. The transmit/receive section is arranged at a position which is dislocated toward the dielectric lens by a given distance from a focus of the dielectric lens along an antenna axis, while the primary radiators are arranged along a layout axis orthogonal to the antenna axis. With this arrangement, signals received at the respective primary radiators have a sufficiently large phase difference therebetween depending on a bearing of the coming radar waves so that the bearing can be detected with high accuracy.

FIG. 1

EP 0 773 598 A2

**Description**

BACKGROUND OF THE INVENTION

Field of the Invention

The present invention relates to an aperture antenna for use in a radar which is capable of detecting a bearing of a target using radar waves.

Description of the Prior Art

As the aperture antenna of this type, Japanese First (unexamined) Patent Publication No. 52-19047, for example, discloses a multi-beam antenna 52 as shown in Fig. 13. In the figure, the multi-beam antenna 52 includes a dielectric lens 54 for focusing or converging the radar waves, and a transmit/receive section 56 composed of a plurality of primary radiators arranged nearby a focus F of the dielectric lens 54 and along an axis Xf perpendicular to an antenna axis Xa which passes through the focus F and the center of the dielectric lens 54. As appreciated, the multi-beam antenna 52, although having only a single aperture, is capable of radiating a plurality of beams having different bearings. This is achieved based on the fact that a bearing of a beam B of the primary radiator changes by moving or dislocating the primary radiator in a direction perpendicular to the antenna axis Xa. Accordingly, a radar employing the multi-beam antenna 52 can roughly measure a bearing of a target by determining which of the beams detects the target.

On the other hand, a radar of a phase monopulse system has been known, wherein the radar waves are received using two receiving antennas and, by deriving a phase difference between the received signals, the bearing of the target is detected.

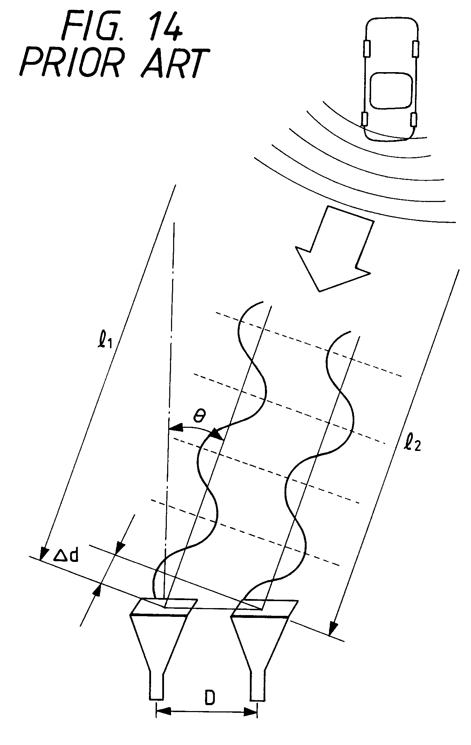

Specifically, as shown in Fig. 14, when the radar waves of a wavelength $\lambda$ coming in a certain direction are received at two antennas spacing a distance D from each other, a difference $\Delta d$ in length between the paths of the radar waves received at the respective antennas and a phase difference $\Delta\phi$ based on the path length difference $\Delta d$ are represented by equations (1) and (2). From the equations (1) and (2), an equation (3) is given, whereby a bearing $\theta$ of the target is derived from the phase difference $\Delta\phi$.

$$\Delta d = D\sin\theta \approx D\theta \qquad (1)$$

$$\Delta\phi = 2\pi\,(\Delta d / \lambda) \qquad (2)$$

$$\theta = \Delta\phi \, \cdot \, \lambda / (2\pi \, \cdot \, D) \qquad (3)$$

wherein the bearing $\theta$ is sufficiently small.

In the former radar using the multi-beam antenna 52, since the bearing is measured by determining which of the beams detects the target, only the rough bearing can be detected so that the bearing detection with high accuracy can not be achieved.

On the other hand, in the latter radar of the phase monopulse system, the plurality of receiving antennas are required to increase the size of the radar.

In view of this, it may be considered to perform the monopulse bearing detection using the multi-beam antenna 52. However, the phase differences among the signals received at the respective primary radiators in the multi-beam antenna 52 are so small that the accurate bearing detection can not be achieved even using the foregoing phase monopulse system.

Specifically, as described above, in the phase monopulse system, the bearing is detected from the phase difference between the received signals caused by the difference in length between the paths of the radar waves received at the primary radiators. However, since the focus F represents a position where the phases of the radar waves coming from the same origin coincide with each other, the phase difference of the signals received at the primary radiators arranged nearby the focus F becomes extremely small.

SUMMARY OF THE INVENTION

Therefore, it is an object of the present invention to provide an improved aperture antenna which is capable of detecting a bearing of a target with high accuracy even with a single aperture.

According to one aspect of the present invention, an aperture antenna comprises converging means for converging radar waves; and at least two primary radiators for receiving the radar waves converged by the converging means, the primary radiators having the same shape with each other and arranged along a given layout axis orthogonal to an antenna axis which passes through a center of the converging means and a focus of the converging means, wherein the primary radiators are arranged at a position which is dislocated from the focus of the converging means by a given distance along the antenna axis.

It may be arranged that the number of the primary radiators is m x n (m≥2, n≥2), that m couplers are provided, each of the m couplers coupling reception outputs from the n primary radiators of the m x n primary radiators and that the n primary radiators are located at (i + m x j)th positions when numbers are assigned to the m x n primary radiators in turn, wherein i=1 to m, j=0 to n-1, and i is fixed.

It may be arranged that the primary radiators are arranged to be offset relative to each other along a vertical axis which is perpendicular to a plane defined by the antenna axis and the layout axis and that apertures of the primary radiators partly overlap each other along the layout axis.

It may be arranged that the primary radiators are arranged such that an axis passing through centers of apertures of the primary radiators coincides with the layout axis and that each of the primary radiators is inclined by a given angle relative to the layout axis,

It may be arranged that the converging means has a horizontal focus on the antenna axis where the radar waves converge along the layout axis and a vertical focus on the antenna axis where the radar waves converge along a vertical axis perpendicular to a plane defined by the antenna axis and the layout axis, the horizontal focus and the vertical focus having focal distances different from each other, and that the primary radiators are arranged at the vertical focus of the converging means.

It may be arranged that at least two primary radiators are further provided, which have the same shape with the aforementioned primary radiators and are arranged along the layout axis at a position offset from the aforementioned primary radiators in a direction along a vertical axis perpendicular to a plane defined by the antenna axis and the layout axis.

It may be arranged that the converging means has a horizontal focus on the antenna axis where the radar waves converge along the layout axis and a vertical focus on the antenna axis where the radar waves converge along the vertical axis and that the horizontal focus and the vertical focus have focal distances which are different from each other.

It may be arranged that each of the primary radiators comprises a circular polarization antenna.

It may be arranged that each of the primary radiators comprises a linear polarization antenna which is disposed such that a plane of polarization is inclined by 45 degrees relative to the layout axis.

It may be arranged that the converging means comprises a dielectric lens.

It may be arranged that the converging means comprises a parabolic reflecting mirror.

It may be arranged that the converging means comprises a Cassegrain reflecting mirror.

It may be arranged that the position of the primary radiators is dislocated toward the converging means.

It may be arranged that the position of the primary radiators is dislocated away from the converging means.

## BRIEF DESCRIPTION OF THE DRAWINGS

The present invention will be understood more fully from the detailed description given hereinbelow, taken in conjunction with the accompanying drawings.

In the drawings:

Fig. 1 is an explanatory diagram showing an aperture antenna according to a first preferred embodiment of the present invention;

Fig. 2 is a perspective view showing a structure of a transmit/receive section of the aperture antenna shown in Fig. 1;

Fig. 3A is a graph of a simulation result showing a relationship between bearings $\theta$ of a target and phase differences $\Delta\phi$ of received signals, according to the first preferred embodiment;

Fig. 3B is a graph of a simulation result showing a relationship between bearings $\theta$ of a target and phase differences $\Delta\phi$ of received signals, according to the prior art;

Fig. 4 is a perspective view showing a structure of a transmit/receive section of an aperture antenna according to a second preferred embodiment of the present invention;

Fig. 5 is a perspective view showing a structure of a transmit/receive section of an aperture antenna according to a modification of the second preferred embodiment;

Fig. 6A is a perspective view showing a structure of a transmit/receive section of an aperture antenna according to a third preferred embodiment of the present invention;

Fig. 6B is an explanatory diagram for comparison with the structure shown in Fig. 6A;

Fig. 7 is a perspective view showing a structure of a transmit/receive section of an aperture antenna according to a fourth preferred embodiment of the present invention;

Fig. 8 is a perspective view showing a structure of a transmit/receive section of an aperture antenna according to a modification of the fourth preferred embodiment;

Fig. 9A is a front view of an aperture antenna according to a fifth preferred embodiment of the present invention;

Fig. 9B is a sectional view taken along line VI-VI in Fig. 9A;

Fig. 9C is a sectional view taken along line H1-H1 in Fig. 9A;

Fig. 10A is a front view of an aperture antenna according to a sixth preferred embodiment of the present invention;

Fig. 10B is a sectional view taken along line V2-V2 in Fig. 10A;

Fig. 10C is a sectional view taken along line H2-H2 in Fig. 10A;

Fig. 11A is an explanatory diagram showing an antenna structure, wherein a parabolic reflecting mirror is used instead of a dielectric lens;

Fig. 11B is an explanatory diagram showing an antenna structure, wherein a Cassegrain reflecting mirror is used instead of a dielectric lens;

Figs. 12A to 12C are diagrams for explaining an operation of the first preferred embodiment;

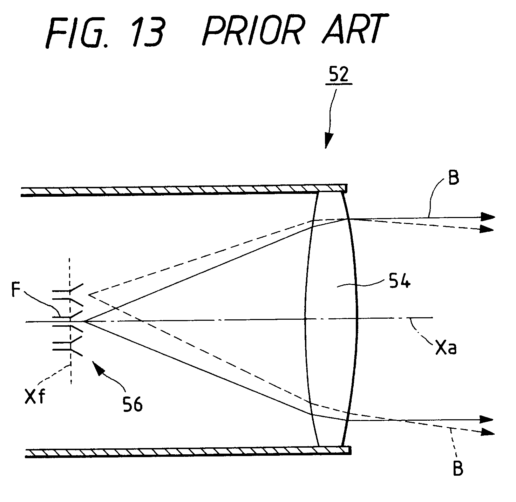

Fig. 13 is an explanatory diagram showing a conventional multi-beam antenna; and

Fig. 14 is a diagram for explaining the principal of a bearing detection based on a phase monopulse system.

## DESCRIPTION OF THE PREFERRED EMBODIMENT

Now, preferred embodiments of the present invention will be described hereinbelow with reference to the accompanying drawings.

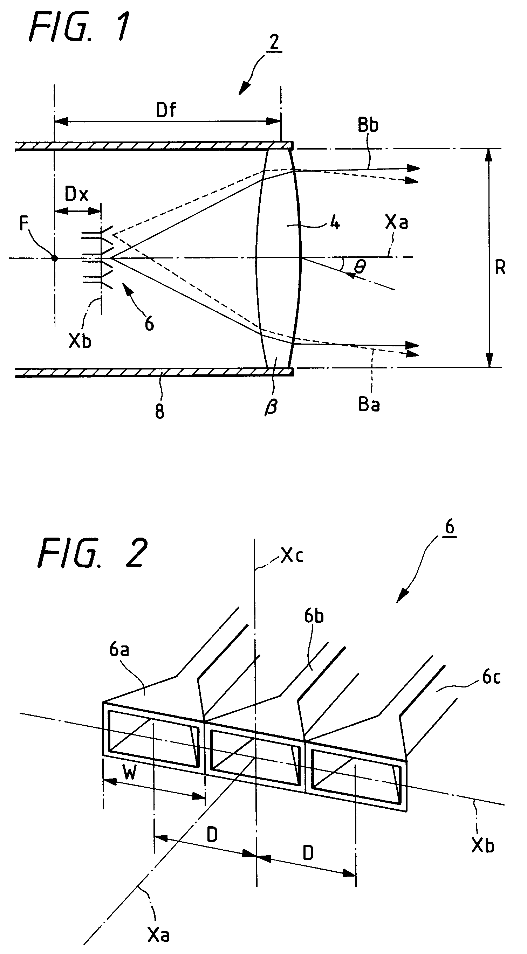

Fig. 1 is an explanatory diagram showing an aperture antenna 2 for use in an obstacle detecting radar installed in a vehicle, according to a first preferred embodiment of the present invention.

As shown in Fig. 1, the aperture antenna 2 includes a dielectric lens 4 for focusing or converging the radar waves coming from the exterior, a transmit/receive section 6 composed of three primary radiators for transmitting the radar waves via the dielectric lens 4 and receiving the radar waves converged via the dielectric lens 4, and a casing 8 in the form of a wave absorber surrounding the dielectric lens 4 and the transmit/receive section 6.

The transmit/receive section 6 is arranged at a position which is offset or dislocated toward the dielectric lens 4 by a given distance Dx from a focus F of the dielectric lens 4 along an antenna axis Xa passing through the focus F and the center of the dielectric lens 4. The three primary radiators forming the transmit/receive section 6 are arranged along a layout axis Xb orthogonal to the antenna axis Xa.

As shown in Fig. 2, the primary radiators of the transmit/receive section 6 are in the form of horn antennas 6a to 6c. The horn antenna 6b located between the horn antennas 6a and 6c are arranged at a position where the antenna axis Xa passes through the center of an aperture of the horn antenna 6b. Further, the horn antennas 6a to 6c are arranged to be in contact with each other such that a line passing through the centers of the apertures of the horn antennas 6a to 6c coincides with the layout axis Xb. Specifically, a distance D between the horn antennas 6a and 6b (or 6b and 6c), that is, between the centers of the apertures of the adjacent horn antennas, is equal to a lateral width (a width along the layout axis Xb) W of the aperture of each horn antenna.

To the horn antennas 6a to 6c are connected feeder lines (not shown), respectively, so that the received signals are outputted via these feeder lines.

When mounted to the vehicle, the aperture antenna 2 is disposed such that the layout axis Xb lies in a horizontal direction so as to make it possible to detect an obstacle located in the horizontal direction.

In the aperture antenna 2 having the foregoing structure, the horn antennas 6a to 6c radiate beams in different directions, such as beams Ba and Bb shown in Fig. 1 where a beam from the horn antenna 6c is not shown for simplicity. Upon receipt of the radar waves from a target located at a region where at least two beams overlap each other, signals received from the horn antennas, which are radiating sources of the beams detecting the target, have a phase difference $\Delta\phi$ corresponding to a bearing $\theta$ of the target.

Accordingly, in the radar employing the foregoing aperture antenna 2, the bearing $\theta$ of the target can be detected by deriving the phase difference $\Delta\phi$ of the received signals.

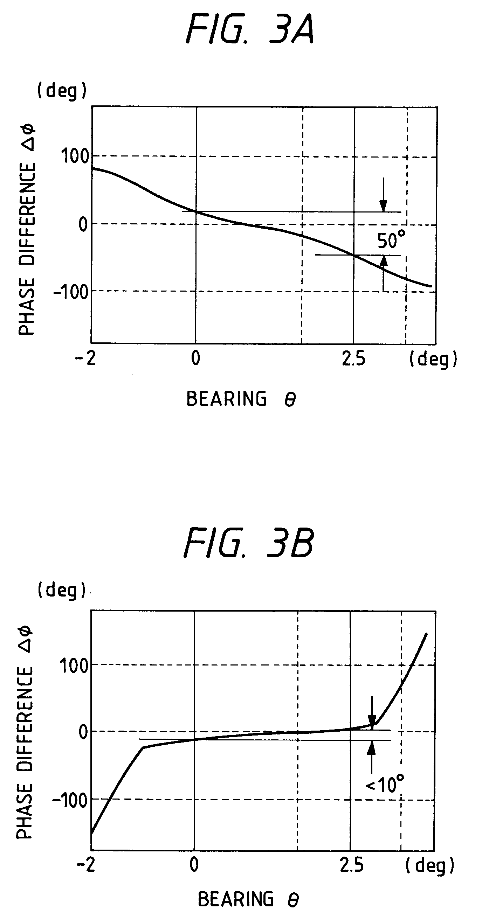

Fig. 3A is a graph of a simulation result, according to this preferred embodiment, showing a relationship

between bearings $\theta$ of the target and phase differences $\Delta\phi$ of the received signals, wherein the radar waves having a wavelength $\lambda$ of 5mm are received at the horn antennas 6a and 6b from the target at the bearings $\theta$. In the simulation, a caliber R of the dielectric lens 4 is set to 70mm, a refractive index $\beta$ to 1.52, a focal distance Df to 134.6mm, a distance Dx from the focus F to the transmit/receive section 6 to 33.65mm, and a distance D between the horn antennas 6a and 6b to 4.4mm.

For comparison, Fig. 3B shows a simulation result, according to the prior art, of a relationship between bearings $\theta$ of the target and phase differences $\Delta\phi$ of the received signals from the horn antennas 6a and 6b, which relationship is derived under the same condition as that shown in Fig. 3A except that a distance Dx from the focus F to the transmit/receive section 6 is set to 0mm.

As seen from Fig. 3A, in the aperture antenna 2 of this preferred embodiment, as the bearing $\theta$ differs by 1 degree, the detected phase difference $\Delta\phi$ changes by about 20 degrees. This means that, if an analyzer of the radar can detect the phase difference $\Delta\phi$ of the received signals per, for example, 1 degree, the bearing $\theta$ can be detected per unit of 0.05 degrees. On the other hand, according to the prior art, as seen from Fig. 3B, in the range of the bearings 0 to 2.5 degrees, the detected phase difference $\Delta\phi$ of the received signals changes only by about 4 degrees as the bearing $\theta$ differs by 1 degree so that the bearing $\theta$ can be detected only per unit of 0.25 degrees.

Thus, in the radar employing the aperture antenna 2 of this preferred embodiment, the detection of the bearing $\theta$ can be achieved with the resolution about five times (0.25/0.05) as high as that in the prior art where the transmit/receive section 6 is arranged nearby the focus F.

As described above, in the aperture antenna 2 of this preferred embodiment, the transmit/receive section 6 is arranged at the position dislocated from the focus F by the given distance so that the received signals from the horn antennas 6a to 6c have the sufficiently large phase differences $\Delta\phi$ relative to each other depending on the bearing $\theta$ of the coming radar waves. Accordingly, in the radar employing the aperture antenna 2 of this preferred embodiment, the bearing of the target can be detected accurately with the single aperture (dielectric lens 4) and thus without increasing the size of the radar.

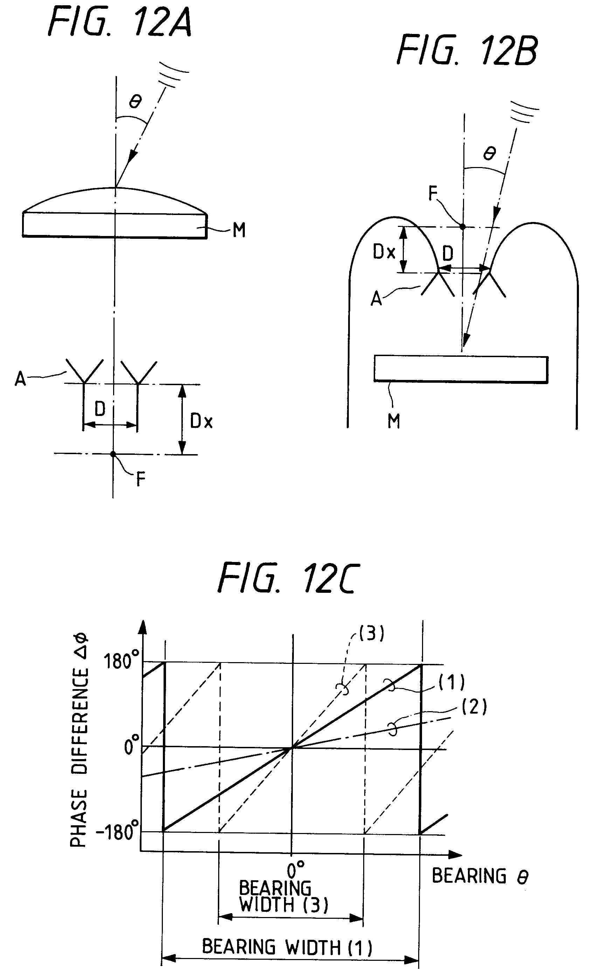

The principal of the foregoing first preferred embodiment will be further explained with reference to Figs. 12A to 12C.

In Figs. 12A and 12B, symbol A represents a primary radiator and symbol M represents converging means (a lens in Fig. 12A while a reflecting mirror in Fig. 12B). In these figures, by arranging the primary radiators A at a position offset from a focus F of the converging means M by a given distance Dx, a phase difference $\Delta\phi$ is caused between the radar waves received at the respective primary radiators A. As appreciated, upon receipt of the radar waves at the primary radiators A via the converging means M, the phases of the radar waves are matched at the focus F due to the function of the converging means M.

Fig. 12C is a graph showing a relationship between the bearings $\theta$ of the coming radar waves and the phase differences $\Delta\phi$ of the received signals from the two primary radiators A which received the radar waves. In Fig. 12C, the solid line (1) represents a characteristic when the primary radiators A are arranged at the position dislocated from the focus F by the given distance, the chain line (2) represents a characteristic when the primary radiators A are arranged nearby the focus F, and the dotted line (3) represents a characteristic when the primary radiators A are arranged at a position further dislocated from the focus F as compared with the solid line (1).

If the phase difference $\Delta\phi$ exceeds $\pm180$ degrees, the bearing $\theta$ can not be defined so that the bearing detection is disabled. Thus, the detectable bearing range (bearing width) is limited in the range of the phase differences $\Delta\phi$ between $\pm180$ degrees.

Specifically, as appreciated from Fig. 12C, as an inclination of the characteristic line increases, the phase difference $\Delta\phi$ per unit bearing $\theta$ also increases so that the bearing detecting capability is improved, while the bearing width becomes smaller to reduce the bearing detectable range. In view of this, when the precise detection is required in the narrow bearing width, for example, in case of detecting a long-distance target, the distance Dx from the focus F may be set greater to increase an inclination of the characteristic line, while, when the detection is required in the extensive bearing width, for example, in case of detecting a short-distance target, the distance Dx from the focus F may be set smaller to reduce an inclination of the characteristic line. In this fashion, the desired characteristic can be achieved depending on necessity.

On the other hand, when performing the bearing detection based on the phase monopulse system, it is necessary that the primary radiators are so arranged as to render their beams overlap each other and at least two primary radiators receive the reflected radar waves simultaneously. Thus, it is necessary to set a distance D between the primary radiators (that is, between the centers of apertures of the primary radiators) to a certain small value so as to reduce a difference in bearing between the beams.

On the contrary, in order to improve the detection performance or accuracy, it is necessary to set an area of the aperture of the primary radiator to a certain great value so as to increase the gain of the primary radiator and thus the antenna.

However, as appreciated, the primary radiators can not be located at an interval smaller than a width of the aperture along the layout axis Xb (see Figs. 1 and 2). Thus, if the aperture area of the primary radiator is increased for enlarging the gain of the antenna, the distance D between the primary radiators increases so that the bearings of the beams radiated from the respective primary radiators largely differ from each other, thereby disabling the bearing detection. This is because, as seen from Fig. 12C, as the distance D between the primary radiators increases, an inclination of the characteristic line also increases so that the detectable bearing width is subjected to the increased limitation.

A second preferred embodiment of the present invention aims to improve this. An aperture antenna of the second preferred embodiment differs from that of the first preferred embodiment only in an arrangement of the horn antennas 6a to 6c, and thus, only this arrangement will be described hereinbelow for brevity.

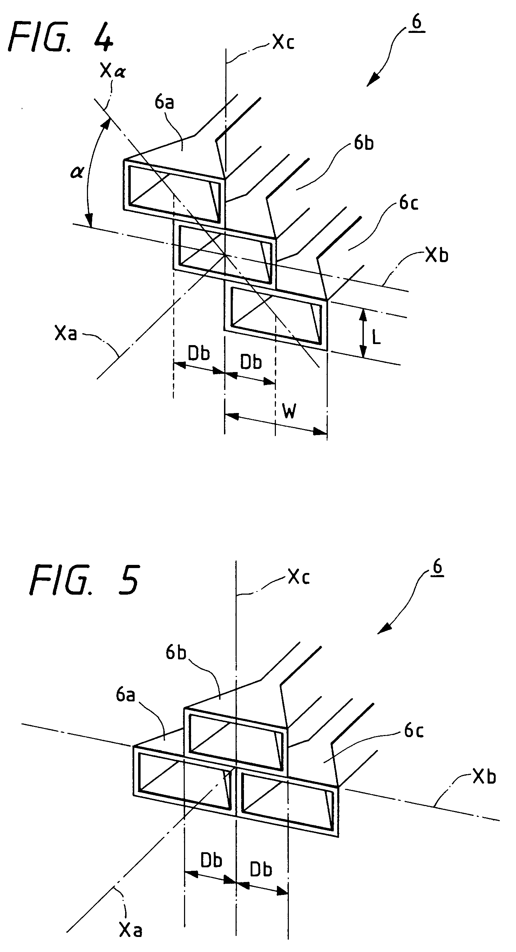

As shown in Fig. 4, like in the first preferred embodiment, the transmit/receive section 6 includes the horn antennas 6a to 6c as the primary radiators. The horn antenna 6b located between the horn antennas 6a and 6c are arranged at a position where the antenna axis Xa passes through the center of the aperture of the horn antenna 6b.

In the figure, the horn antenna 6a is arranged at an upper-left side of the horn antenna 6b so that halves of their apertures overlap each other along the layout axis Xb in a vertical direction (that is, in a direction of an axis Xc which is perpendicular to a plane defined by the antenna axis Xa and the layout axis Xb). Similarly, the horn antenna 6c is arranged at a lower-right side of the horn antenna 6b so that halves of their apertures overlap each other along the layout axis Xb in the vertical direction. Specifically, the centers of the apertures of the horn antennas 6a to 6c are located on an axis $X\alpha$ which is inclined by a given angle $\alpha$ (= $\tan^{-1}$ (L/(W/2))) relative to the layout axis Xb depending on a width W and a length L of the aperture.

With this arrangement, a horizontal distance Db between the adjacent horn antennas, that is, a distance obtained by projecting a distance D between the centers of the adjacent apertures onto the layout axis Xb, is half the width W of the aperture. As appreciated, since the aperture antenna 2 is for detecting the bearing on the plane defined by the antenna axis Xa and the layout axis Xb, the effective distance between the horn antennas is the distance obtained by projecting the actual distance D onto this plane and thus the layout axis Xb.

Further, by adjusting the overlapping width of the adjacent horn antennas, the horizontal distance Db can be set to a desired value. In addition, since there is no obstacle relative to the horn antennas in the layout direction Xb, the width W and thus the area of the aperture can be set to desired values.

As described above, according to the aperture antenna 2 of this preferred embodiment, when detecting the bearing on the plane defined by the antenna axis Xa and the layout axis Xb, the effective distance between the horn antennas, that is, the horizontal distance Db between the horn antennas, can be desirably set. Thus, not only the bearings of the beams from the respective horn antennas 6a to 6c and the characteristic of the phase differences $\Delta\phi$ of the received signals relative to

the bearing $\theta$ of the coming radar waves can be desirably set, but also the area of the aperture of the horn antenna can be desirably set. Thus, the gains of the horn antennas 6a to 6c can be increased without changing the characteristic of the phase differences $\Delta\phi$ relative to the bearing $\theta$, while ensuring the overlapping regions of the antenna beams radiated from the adjacent horn antennas, thereby improving the bearing detection performance.

In this preferred embodiment, the axis X$\alpha$ passing through the centers of the apertures of the horn antennas 6a to 6c is inclined by the angle $\alpha$ relative to the layout axis Xb. On the other hand, it may be arranged that the axis X$\alpha$ passing through the centers of the apertures of the horn antennas 6a to 6c coincides with the layout axis Xb and that each of the horn antennas 6a to 6c itself is inclined by the angle $\alpha$ relative to the layout axis Xb.

Further, as shown in Fig. 5, it may be arranged that the horn antennas 6a and 6c are arranged at lower-left and lower-right sides of the horn antenna 6b, respectively, with halves of the apertures of the horn antennas 6a and 6c overlapping halves of the aperture of the horn antenna 6b, respectively, along the layout axis Xb and that the horn antenna 6b is located above the layout axis Xb, while the horn antennas 6a and 6c are located below the layout axis Xb.

In the arrangement of Fig. 5, by adjusting the overlapping width, the horizontal distance Db between the horn antennas can be set half the width W of the aperture at minimum.

Now, a third preferred embodiment of the present invention will be described hereinbelow.

An aperture antenna of the third preferred embodiment differs from that of the first preferred embodiment only in a structure of the transmit/receive section 6, and thus, only this structure will be described hereinbelow for brevity.

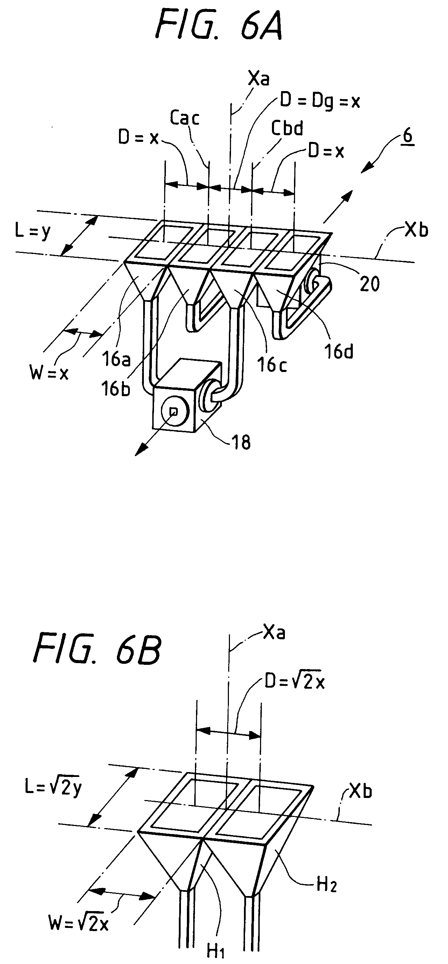

As shown in Fig. 6A, the transmit/receive section 6 includes four horn antennas 16a to 16d arranged in a line, a coupler 18 for coupling outputs of the horn antennas 16a and 16c, and a coupler 20 for coupling outputs of the horn antennas 16b and 16d.

Now, it is assumed that a width W, a length L and an area of an aperture of each of the horn antennas 16a to 16d is given as x, y and S $(= x \cdot y)$, respectively. The horn antennas 16a to 16d are arranged in a line along the layout axis Xb such that an axis passing through the centers of the apertures of the horn antennas 16a to 16d coincides with the layout axis Xb and that the adjacent horn antennas are in contact with each other. Thus, a distance D between the adjacent horn antennas is set to x as equal to the width W of the aperture.

The transmit/receive section 6 thus structured is equivalent to a structure provided with two horn antennas each having an aperture area of 2S (hereinafter, this horn antenna having the 2S aperture area will be referred to as "composite antenna"). In the first composite antenna having the horn antennas 16a and 16c and the coupler 18, the middle point between the centers of the apertures of the horn antennas 16a and 16c, that is, the center of the aperture of the horn antenna 16b, corresponds to a center Cac of the first composite antenna. Similarly, in the second composite antenna having the horn antennas 16b and 16d and the coupler 20, the center of the aperture of the horn antenna 16c corresponds to a center Cbd of the second composite antenna. Accordingly, a distance between the first and second composite antennas is equal to the distance D between the horn antennas 16b and 16c, that is, the width W of the aperture, and thus is x.

For comparison with Fig. 6A, Fig. 6B shows an arrangement, wherein two horn antennas H1 and H2, each of which has an aperture area of 2S with a width W and a length L enlarged at the same proportion, are disposed in contact with each other. As shown in the figure, since the width W and the length L of the aperture of each of the horn antennas H1 and H2 become $\sqrt{2}$ times as great as those of each of the horn antennas 16a to 16d having the aperture area of S, a distance D between the horn antennas H1 and H2 also becomes $\sqrt{2}$ times greater. On the other hand, if only the width W is enlarged without changing the length L, the distance D between the horn antennas H1 and H2 becomes two times greater. Thus, as appreciated, if the horn antennas H1 and H2 each having the greater aperture area are simply employed, the distance D between the horn antennas H1 and H2 increases corresponding to increasing of the aperture area. Accordingly, even if the gain of the antenna is improved, a difference between beam directions of the horn antennas H1 and H2 becomes greater. Thus, due to increasing of the distance D between the horn antennas H1 and H2, the rate of change in phase difference $\Delta\phi$ relative to unit bearing $\theta$ becomes greater so that the bearing width satisfying -180°$\leq\Delta\phi\leq$<180° is reduced. Further, due to increasing of the beam bearing difference between the respective antennas, the overlapping area of the beams which can be simultaneously received at the respective antennas is reduced so that the region, where the phase difference $\Delta\phi$ can be attained, is also reduced.

As described above, in this preferred embodiment, the two composite antennas are constituted from the four horn antennas 16a to 16d each having the aperture area of S by coupling the outputs of the two horn antennas, respectively. Thus, two primary radiators each having the aperture area of 2S are attained as a result. Further, the horn antennas 16a and 16c constituting the first composite antenna are arranged alternately with the horn antennas 16b and 16d constituting the second composite antenna so that a distance Dg between the first and second composite antennas is set equal to the distance D between the adjacent horn antennas.

Therefore, according to this preferred embodiment, the aperture areas, that is, the gains, of the primary radiators can be enlarged without changing the beam directions of the primary radiators (first and second composite antennas) and the relationship between the bearing θ of the coming radar waves and the phase difference Δφ of the received signals. Thus, as in the foregoing second preferred embodiment, the bearing detection performance can be improved.

The concept of the third preferred embodiment will be explained hereinbelow in a generalized fashion.

It is assumed that the aperture antenna includes m x n primary radiators, wherein m≥2 and n≥2, that m couplers are provided, each of which couples reception outputs from the n primary radiators among the m x n primary radiators and that the n primary radiators are located at (i + m x j)th positions, wherein numbers are assigned to the m x n primary radiators in turn and wherein i=1 to m, j=0 to n-1, and i is fixed.

With this arrangement, when the primary radiators each having an aperture area of S are arranged at intervals W, the aperture antenna operates in a manner equivalent to a case where m primary radiators each having an aperture area of n x S are arranged at intervals W.

Specifically, if the center of the aperture of the first primary radiator is given as the origin, a center position $C_i$ of an i-th composite primary radiator including an i-th primary radiator is given by an equation (4). Thus, a distance ($C_{i+1}$ - $C_i$) between the i-th composite primary radiator and an (i+1)th composite primary radiator always becomes W.

$$C_i = (i - 1) W + (m - 1) nL/2 \qquad (4)$$

Accordingly, in the aperture antenna having the foregoing arrangement, the aperture areas can be enlarged without increasing the distances between the adjacent primary radiators so as to be essentially free of the bearing width limitation. Thus, the bearing detection performance or accuracy can be improved.

Now, a fourth preferred embodiment of the present invention will be described hereinbelow.

An aperture antenna of the fourth preferred embodiment differs from that of the first preferred embodiment only in a structure of the transmit/receive section 6, and thus, only this structure will be described hereinbelow for brevity.

In this preferred embodiment, the transmit/receive section 6 includes three circular polarization antennas 26a to 26c as primary radiators.

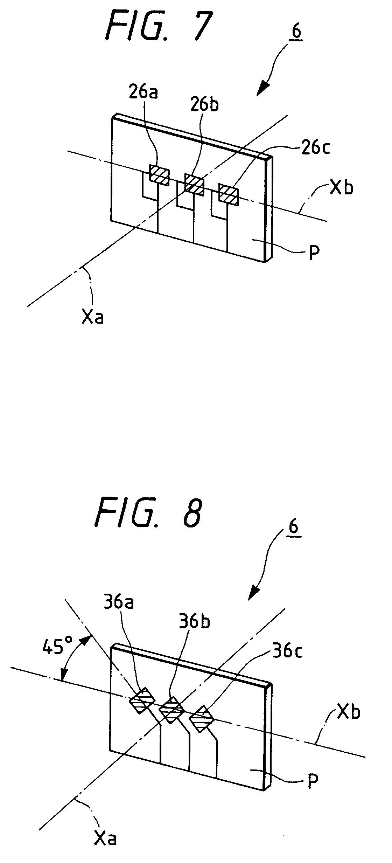

As shown in Fig. 7, the circular polarization antennas 26a to 26c are in the form of rectangular film conductors, respectively, provided on a dielectric board P. Each of the circular polarization antennas 26a to 26c further includes feeding points at given positions relative to the film conductor, that is, at a position offset leftward from the center of the film conductor along the layout axis Xb and at a position offset downward from the center of the film conductor along an axis orthogonal to the layout axis Xb.

Each of the circular polarization antennas 26a to 26c thus structured receives only the left-hand circularly polarized waves. Hence, a vehicular obstacle detecting radar employing the aperture antenna 2 of this preferred embodiment is arranged to transmit the right-hand circularly polarized waves and receive the reflected waves in the form of the left-hand circularly polarized waves as a result of the reflection upon the target.

The thus structured radar, even if a vehicle on the opposite lane uses the same radar, does not receive the radar waves transmitted therefrom, but securely receives only the reflected waves of the radar waves transmitted from the radar of its own since the radar waves transmitted from the radar on the opposite-lane vehicle are the right-hand circularly polarized waves.

Thus, by using the aperture antenna 2 of this preferred embodiment, the highly reliable radar, which is free of interference by the transmitted waves from the opposite-lane vehicle, can be achieved.

In this preferred embodiment, the transmit/receive section 6 includes the circular polarization antennas 26a to 26c each having the film conductor with two feeding points. On the other hand, as shown in Fig. 8, the transmit/receive section 6 may be constituted by linear polarization antennas 36a to 36c, wherein one of the feeding points of each of the film conductors is omitted and each of the film conductors is inclined by 45 degrees relative to the layout axis Xb.

The thus structured linear polarization antennas 36a to 36c each receive only the linearly polarized waves with the plane of polarization inclined by 45 degrees.

Since an angle of the plane of polarization of the linearly polarized waves reflected from the target is the same as an angle of the plane of polarization of the transmitted waves, a radar employing the aperture antennas 2 having the linear polarization antennas 36a to 36c as primary radiators is arranged to transmit the radar waves with an angle of the plane of polarization being the same as that of the receivable linearly polarized waves.

As a result, the thus structured radar, even if a vehicle on the opposite lane uses the same radar, does not receive the radar waves transmitted therefrom, but securely receives only the reflected waves of the radar waves transmitted from the radar of its own since the plane of polarization of the radar waves transmitted from the radar on the opposite-lane vehicle differs from that of the receivable linearly polarized waves by 90 degrees. Thus, the same effect can be achieved as in the case of using the circular polarization antennas.

Further, when using the linear polarization antennas 36a to 36c as primary radiators, since the angles of the planes of polarization of the transmitted and received (reflected) waves are equal to each other, the primary radiators can be used as not only receivers, but also transmitters.

Now, a fifth preferred embodiment of the present invention will be described hereinbelow.

An aperture antenna of the fifth preferred embodiment differs from that of the first preferred embodiment only in structures of the dielectric lens 4 and the transmit/receive section 6, and thus, only these structures will be described hereinbelow for brevity.

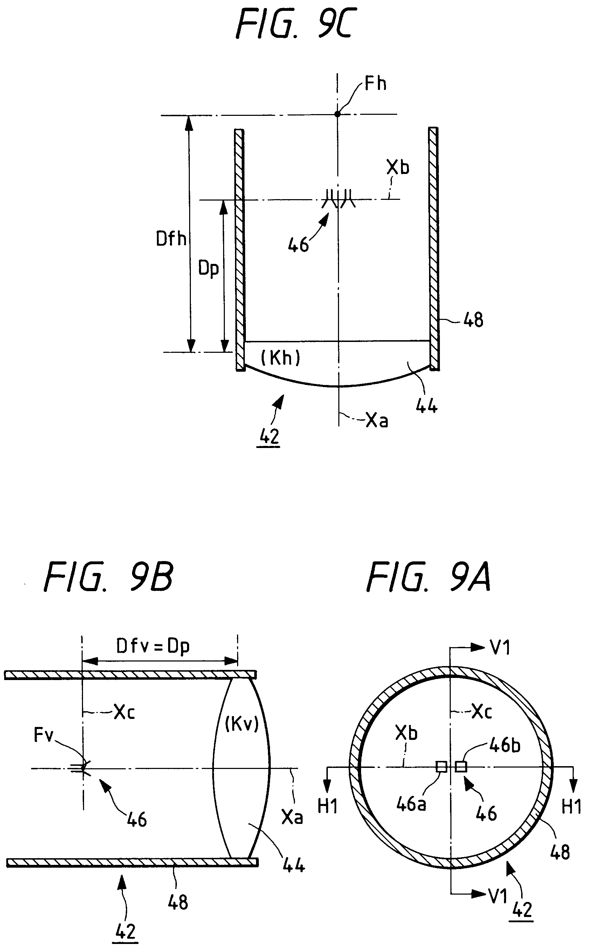

Fig. 9A is a front view of the aperture antenna according to this preferred embodiment, Fig. 9B is a sectional view taken along line V1-V1 in Fig. 9A, and Fig. 9C is a sectional view taken along line H1-H1 in Fig. 9A.

As shown in Figs. 9A to 9C, the aperture antenna 42 of this preferred embodiment employs a dielectric lens 44 having a spherical outer side and a cylindrical inner side. The dielectric lens 44 is attached to a casing 48 with an axis of the cylindrical inner side being parallel to the layout axis Xb.

Specifically, the cylindrical inner side of the dielectric lens 44 has a curvature Kh ($\approx 0$) in a direction (horizontal direction) along a plane defined by the antenna axis Xa and the layout axis Xb, and a curvature Kv ($>$ Kh) in a direction (vertical direction) along a plane defined by the vertical axis Xc perpendicular to the Xa-Xb plane and the antenna axis Xa. Accordingly, a focal distance Dfh to a horizontal focus Fh where the radar waves converge in the horizontal direction is set greater than a focal distance Dfv to a vertical focus Fv where the radar waves converge in the vertical direction, that is, Dfh>Dfv.

A transmit/receive section 46 includes a pair of primary radiators 46a and 46b arranged along the layout axis Xb. The transmit/receive section 46 is located at the vertical focus Fv of the dielectric lens 44 (Dp=Dfv, wherein Dp represents a distance between the center of the dielectric lens 44 and the transmit/receive section 46), that is, the transmit/receive section 46 is arranged at a position offset or dislocated from the horizontal focus Fh of the dielectric lens 44 (Dp<Dfh).

As described above, in the aperture antenna 42 of this preferred embodiment, the transmit/receive section 46 is arranged at the position dislocated from the horizontal focus Fh of the dielectric lens 44 so that outputs from the primary radiators 46a and 46b have a sufficiently large phase difference therebetween depending on the horizontal bearing of the target to be detected. Thus, the horizontal bearing can be detected with high accuracy. Further, the transmit/receive section 46 is arranged at the vertical focus Fv of the dielectric lens 44 so that the vertically spread radar waves converge efficiently to the primary radiators 46a and 46b. Thus, the antenna gain can be improved as much as possible.

Specifically, if the primary radiators are arranged dislocated from the focus, the phase difference detected between the primary radiators can be enlarged while the antenna gain is reduced. On the other hand, the relationship between the bearing on the plane defined by the antenna axis and the layout axis and the phase difference detected at the primary radiators arranged along the layout axis is determined by the arrangement of the horizontal focus of the dielectric lens and the primary radiators, and does not rely on the vertical focus of the dielectric lens. Thus, by arranging the primary radiators at the vertical focus of the dielectric lens, the antenna gain can be improved without affecting the characteristic of the phase difference detected at the primary radiators and without enlarging the aperture areas of the primary radiators and the aperture area of the aperture antenna itself.

Now, a sixth preferred embodiment of the present invention will be described hereinbelow.

An aperture antenna of the sixth preferred embodiment differs from that of the first preferred embodiment only in structures of the dielectric lens 4 and the transmit/receive section 6, and thus, only these structures will be described hereinbelow for brevity.

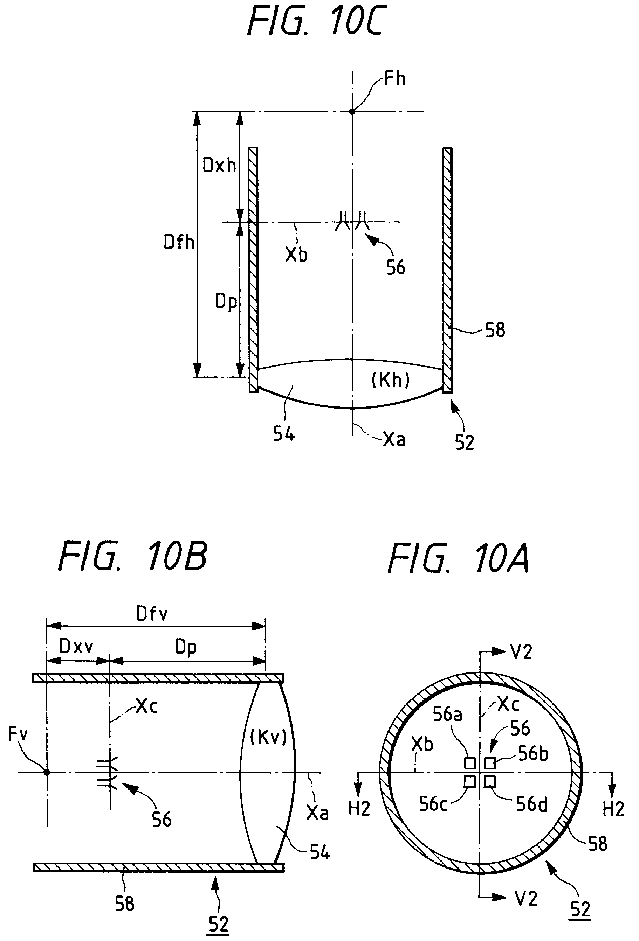

Fig. 10A is a front view of the aperture antenna according to this preferred embodiment, Fig. 10B is a sectional view taken along line V2-V2 in Fig. 10A, and Fig. 10C is a sectional view taken along line H2-H2 in Fig. 10A.

As shown in Figs. 10A to 10C, in the aperture antenna 52 of this preferred embodiment, a transmit/receive section 56 includes four primary radiators 56a to 56d. The pair of primary radiators 56a and 56b and the pair of primary radiators 56c and 56d are arranged along the layout axis Xb, respectively. On the other hand, the pair of primary radiators 56a and 56c and the pair of primary radiators 56b and 56d are arranged along the vertical axis Xc, respectively.

With this arrangement, based on outputs from the pair of primary radiators 56a and 56b (or 56c and 56d) arranged along the layout axis Xb, the horizontal bearing can be detected from the phase difference therebetween. On the other hand, based on outputs from the pair of primary radiators 56a and 56c (or 56b and 56d) arranged along the vertical axis Xc, the vertical bearing can be detected from the phase difference therebetween.

An inner side of a dielectric lens 54 has a curvature Kh in the horizontal direction and a curvature Kv in the vertical direction. The curvatures Kh and Kv differ from each other (Kh$\neq$Kv) so that a focal distance Dfh to a horizontal focus Fh of the dielectric lens 54 and a focal distance Dfv to a vertical focus Fv of the dielectric lens 54 are set different from each other. The transmit/receive section 56 is arranged at a position spacing from the dielectric lens 54 by a distance Dp, while the horizontal focus Fh is located at a position offset from the transmit/receive section 56 by a distance Dxh and the vertical focus Fv is located at a position offset from the transmit/receive section 56 by a distance Dxv ($<$ Dxh), that is, Dfh=Dp+Dxh and Dfv=Dp+Dxv. Thus, it is arranged that different bearing widths can be attained in the horizontal and vertical directions, respectively.

As described above, according to the aperture antenna 52 of this preferred embodiment, since the curvatures (focal distances) of the dielectric lens 54 and thus the bearing widths of the aperture antenna 52 are set independently in the horizontal and vertical directions, even if the ranges of the bearing detection differ from each other in the horizontal and vertical directions, the bearing detection accuracy can be achieved to the utmost depending on the respective detection ranges. This is advantageous since, if the horizontal and vertical focuses of the dielectric lens coincide with each other while the ranges of the bearing detection differ in the horizontal and vertical directions, it is necessary to set the bearing width matching the larger detection range. Thus, the bearing width is unnecessarily enlarged for the smaller detection range (that is, the rate in change of the phase difference relative to unit bearing is unnecessarily reduced) so that the detection accuracy is lowered.

While the present invention has been described in terms of the preferred embodiments, the invention is not to be limited thereto, but can be embodied in various ways without departing from the principle of the invention as defined in the appended claims.

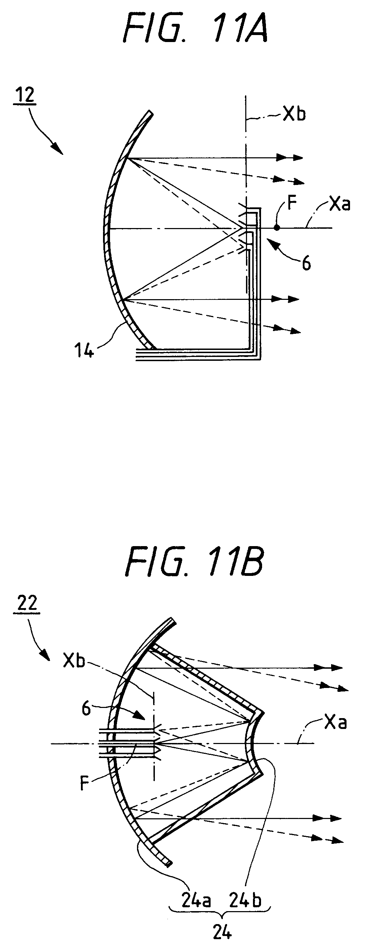

For example, as shown in Fig. 11A, a parabolic reflecting mirror 14 may be used instead of the dielectric lens 4 so as to constitute a parabolic antenna 12. In this case, like in the foregoing preferred embodiments, a transmit/receiving section 6 is arranged at a position dislocated toward the reflecting mirror 14 from a focus F thereof along an antenna axis Xa passing through the focus F and the center of the reflecting mirror 14, and a plurality of primary radiators forming the transmit/receive section 6 are arranged along a layout axis Xb orthogonal to the antenna axis Xa.

Similarly, as shown in Fig. 11B, a Cassegrain reflecting mirror 24 having a main reflecting mirror 24a and a secondary reflecting mirror 24b may be used instead of the dielectric lens 4 so as to constitute a Cassegrain antenna 22. Also in this case, a transmit/receiving section 6 is arranged at a position dislocated toward the secondary reflecting mirror 24b from a focus F of the reflecting mirror 24 along an antenna axis Xa passing through the focus F and the center of the reflecting mirror 24, and a plurality of primary radiators forming the transmit/receive section 6 are arranged along a layout axis Xb orthogonal to the antenna axis Xa. Instead of arranging the transmit/receive section 6 dislocated from the focus F, the secondary reflecting mirror 24b may be dislocated in either direction along the antenna axis Xa.

The same effect can be achieved by the thus structured parabolic antenna 12 or Cassegrain antenna 22 as in the foregoing preferred embodiments employing the dielectric lens 4.

Further, as appreciated, the transmit/receive section 6 may be dislocated in either direction along the antenna axis Xa relative to the dielectric lens 4 or the reflecting mirror 14, 24, that is, toward or away from the dielectric lens 4 or the reflecting mirror 14, 24.

Further, in the foregoing preferred embodiments, the horn antenna or the film conductor antenna is used as the primary radiator. However, any antenna, which can be normally used as a primary radiator, can be used instead of the horn antenna or the film conductor antenna.

## Claims

1. An aperture antenna comprising:

   converging means for converging radar waves; and
   at least two primary radiators for receiving the radar waves converged by said converging means, said primary radiators having the same shape with each other and arranged along a given layout axis orthogonal to an antenna axis which passes through a center of said converging means and a focus of said converging means,

   wherein said primary radiators are arranged at a position which is dislocated from the focus of said converging means by a given distance along said antenna axis.

2. The aperture antenna according to claim 1, wherein the number of said primary radiators is m x n (m≥2, n≥2), wherein m couplers are provided, each of said m couplers coupling reception outputs from the n primary radiators of said m x n primary radiators and wherein said n primary radiators are located at (i + m x j)th positions when numbers are assigned to said m x n primary radiators in turn, wherein i=1 to m, j=0 to n-1, and i is fixed.

3. The aperture antenna according to claim 1, wherein said primary radiators are arranged to be offset relative to each other along a vertical axis which is perpendicular to a plane defined by said antenna axis and said layout axis and wherein apertures of said primary radiators partly overlap each other along said layout axis.

4. The aperture antenna according to claim 1, wherein said primary radiators are arranged such that an axis passing through centers of apertures of said primary radiators coincides with said layout axis and wherein each of said primary radiators is inclined by a given angle relative to said layout axis,

5. The aperture antenna according to claim 1, wherein said converging means has a horizontal focus on said antenna axis where the radar waves converge along said layout axis and a vertical focus on said antenna axis where the radar waves converge along a vertical axis perpendicular to a plane defined by said antenna axis and said layout axis, said horizontal focus and said vertical focus having focal distances different from each other, and wherein said primary radiators are arranged at the vertical focus of said converging means.

6. The aperture antenna according to claim 1, further comprising at least two primary radiators having the same shape with said aforementioned primary radiators and arranged along said layout axis at a position offset from said aforementioned primary radiators in a direction along a vertical axis which is perpendicular to a plane defined by said antenna axis and said layout axis.

7. The aperture antenna according to claim 6, wherein said converging means has a horizontal focus on said antenna axis where the radar waves converge along said layout axis and a vertical focus on said antenna axis where the radar waves converge along said vertical axis and wherein said horizontal focus and said vertical focus have focal distances which are different from each other.

8. The aperture antenna according to claim 1, wherein each of said primary radiators comprises a circular polarization antenna.

9. The aperture antenna according to claim 1, wherein each of said primary radiators comprises a linear polarization antenna which is disposed such that a plane of polarization is inclined by 45 degrees relative to said layout axis.

10. The aperture antenna according to claim 1, wherein said converging means comprises a dielectric lens.

11. The aperture antenna according to claim 1, wherein said converging means comprises a parabolic reflecting mirror.

12. The aperture antenna according to claim 1, wherein said converging means comprises a Cassegrain reflecting mirror.

13. The aperture antenna according to claim 1, wherein the position of said primary radiators is dislocated toward said converging means.

14. The aperture antenna according to claim 1, wherein the position of said primary radiators is dislocated away from said converging means.

*FIG. 1*

*FIG. 2*

## FIG. 3A

(deg)

PHASE DIFFERENCE $\Delta\phi$

100

0

-100

50°

BEARING $\theta$

-2    0    2.5    (deg)

## FIG. 3B

(deg)

PHASE DIFFERENCE $\Delta\phi$

100

0

-100

<10°

BEARING $\theta$

-2    0    2.5    (deg)

*FIG. 4*

*FIG. 5*

# FIG. 6A

# FIG. 6B

FIG. 7

FIG. 8

*FIG. 9C*

*FIG. 9B*

*FIG. 9A*

## FIG. 10C

## FIG. 10B

## FIG. 10A

17

## FIG. 11A

## FIG. 11B

## FIG. 12A

## FIG. 12B

## FIG. 12C

FIG. 13 PRIOR ART

FIG. 14
PRIOR ART